Europäisches Patentamt

**European Patent Office**

**Office européen des brevets**

(11) Numéro de publication: **0 093 679**

**A1**

(12) **DEMANDE DE BREVET EUROPEEN**

(21) Numéro de dépôt: **83420069.3**

(22) Date de dépôt: **26.04.83**

(51) Int. Cl.³: **A 23 N 4/04**
**A 23 N 4/08**

(30) Priorité: **29.04.82 FR 8207828**

(43) Date de publication de la demande:
**09.11.83 Bulletin 83/45**

(84) Etats contractants désignés:
**DE FR IT NL**

(71) Demandeur: **MECANIQUE GENERALE J. DEVILLE & CIE**
**Société anonyme**
**Avenue du Forez**
**F-43110 Aurec-sur-Loire (Haute-Loire)(FR)**

(72) Inventeur: **Goudard, Yves**
**Lotissement des Chazournes**
**F-43110 Aurec(FR)**

(74) Mandataire: **Perrier, Jean-Pierre et al,**
**Cabinet GERMAIN & MAUREAU 12 rue de la République**
**F-42000 St-Etienne(FR)**

(54) **Machine à dénoyauter les fruits secs à pulpe sirupeuse.**

(57) Cette machine comporte des plaques articulées (2) formant une chaîne continue et comportant des alvéoles de réception des fruits. Ces plaques passent successivement sous une trémie (4), sous un poste de dénoyautage (5) avec poinçons mobiles (23) et sous un poste d'éjection (6) avec éjecteurs (22).

Pour éviter l'encrassement du mécanisme par le liquide sirupeux du fruit (19), chacun des alvéoles comporte un chanfrein d'entrée et chacune des plaques repose, d'une part, entre la trémie (4) jusqu'au poste de dénoyautage sur une plaque d'essuyage (14) munie d'ouvertures à bord élastique aptes à être traversées par les noyaux (18), tandis qu'au poste d'éjection (16), les éjecteurs verticaux (22) sont juxtaposés aux poinçons de dénoyautage (23) et se délacent verticalement en même temps que ces derniers, de manière à pousser les pulpes (19) à travers les alvéoles en direction des moyens de réception (32).

FIG.1

Croydon Printing Company Ltd.

Machine à dénoyauter les fruits secs à pulpe sirupeuse.

L'invention est relative à une machine à dénoyauter les fruits secs à pulpe sirupeuse tels que les pruneaux, dattes ou autres.

On connait déjà des machines à dénoyauter comportant des plaques alvéolées de réception,de maintien et de transport des fruits,plaques articulées les unes aux autres et formant une chaine continue passant successivement ,avec un déplacement pas-à-pas,au-dessous d'une trémie de distribution des fruits dans les alvéoles,à un poste de dénoyautage où des poinçons mobiles verticalement pénètrent dans les alvéoles et traversent les pulpes pour chasser les noyaux,et à un poste d'éjection des pulpes, où des éjecteurs chassent les pulpes des alvéoles.

Un tel dispositif donne entière satisfaction pour la plupart des fruits,tels que cerises et abricots,mais ne convient pas pour certains fruits,dits secs,et notamment pour les pruneaux.

En effet,dans les machines de ce type,le pruneau est disposé dans des alvéoles comportant une partie supérieure de forme ogivale,apte à recevoir le pruneau,et une partie inférieure de plus petit diamètre apte à être traversée par le noyau.Lors du dénoyautage au moyen d'un poinçon,la petite coupelle de pulpe,formée à la partie inférieure du pruneau par son poinçonnage assuré par le passage du noyau,a tendance à pénétrer dans le trou cylindrique de l'alvéole et à adhérer à la paroi de ce dernier. Il en résulte que,dans la phase suivante,consistant à éjecter la pulpe au moyen d'un poinçon traversant d'abord le trou cylindrique et chassant la pulpe hors de la plaque alvéolée,cette coupelle a tendance à retenir la pulpe et,de manière générale,gêne l'avancement de l'éjecteur.En outre,si elle est détachée de la pulpe par l'éjecteur,elle parvient à adhérer,soit à l'éjecteur,soit au fond de l'alvéole ogivale.L'accumulation de ces fragments de pulpe dans le mécanisme assure son encrassement et perturbe la régularité du fonctionnement de la machine.

A cela,il faut ajouter qu'en raison des traitements que subissent les pruneaux pour pouvoir disloquer les tas qu'ils forment naturellement à l'état sec,leur pouvoir adhésif est accru par la présence de liquide s'ajoutant à celui de la pulpe.

Il ressort de ce qui précède que,même si les machines actuelles peuvent être utilisées pour dénoyauter des pruneaux,elles ne peuvent le faire que temporairement et dans des conditions non industrielles.

La présente invention a pour but de fournir une machine permettant de dénoyauter les fruits secs à pulpe sirupeuse,de manière industrielle,c'est-à-dire à grande cadence et sans risque d'interruption par encrassement des alvéoles ou autres parties du mécanisme.

A cet effet,dans cette machine du type précité,les plaques alvéolées ont des alvéoles cylindriques avec chanfrein d'entrée et reposent,d'une part,de la trémie au début du poste de dénoyautage,sur une plaque fixe constituant fond et,d'autre part,sous le poste de dénoyautage,sur une plaque d'essuyage munie d'ouvertures à bord élastique aptes à être traversées par les noyaux,tandis que le poste d'éjection est constitué par des éjecteurs verticaux qui, juxtaposés aux poinçons de dénoyautage,se déplacent verticalement en même temps que ces derniers et chassent les pulpes à travers les alvéoles en direction de moyens de réception disposés entre les deux brins de la chaîne formée par les plaques alvéolées.

Grâce à la forme cylindrique des alvéoles,au recours à un fond d'obturation temporaire et à l'utilisation d'éjecteurs travaillant dans le même sens que les poinçons de dénoyautage,l'opération d'éjection des pulpes assure, non seulement le résultat recherché,mais aussi le nettoyage par la pulpe elle-même des parois du logement qui la contient,ce qui supprime tout risque d'encrassement.

Dans une forme de réalisation,les poinçons de dénoyautage et les éjecteurs sont associés à des brosses de nettoyage disposées en aval des postes de dénoyautage et

3

d'éjection et aptes,lors du mouvement vertical de dénoyautage,à traverser les alvéoles pour pénétrer dans un bain de liquide de nettoyage.

Ainsi,immédiatement après l'éjection des pulpes,les alvéoles sont automatiquement débarrassées des déchets de pulpe et de toutes traces de liquide sirupeux et ne risquent pas,par encrassement,de perturber le fonctionnement du dispositif.

Avantageusement,et pour faciliter le positionnement des fruits dans les alvéoles et eviter,lors du dénoyautage ,que les noyaux soient cassés suite à une mauvaise présentation des fruits,les poinçons de dénoyautage sont associés à une brosse de positionnement qui,disposée en amont d'eux et dont les poils sont tournés en direction des alvéoles ,est apte,lors du mouvement vertical de descente des poinçons,à pousser les fruits dans les alvéoles.

Dans une variante de réalisation,chacun des éjecteurs a un diamètre inférieur à celui de la partie cylindrique des alvéoles et comporte,à proximité de son extrémité libre,une collerette en matière élastique qui,de diamètre au moins égal à celui d'un alvéole,constitue organe d'essuyage de la paroi de l'alvéole.

Ainsi,à l'action d'essuyage opérée naturellement par la pulpe du fruit éjecté,est associée une action d'essuyage par une collerette élastique qui élimine le jus s'échappant du fruit lors du dénoyautage et présentant naturellement un fort pouvoir adhésif.

D'autres caractéristiques et avantages ressortiront de la description qui suit en référence au dessin schématique annexé représentant,à titre d'exemple non limitatif, une forme d'exécution de cette machine à dénoyauter.

Figure 1 est une vue de côté schématique montrant l'ensemble de la machine ,

Figure 2 est une vue de côté en élévation montrant, à échelle agrandie,l'un des alvéoles ménagés dans les plaques alvéolées,

Figures 3,4 et 5 sont des vues partielles,en coupe transversale ,montrant l'un des alvéoles après réception d'un pruneau,au moment du dénoyautage et dans la phase d'éjection de la pulpe,

Figure 6 est une vue de côté partielle montrant schématiquement une variante de réalisation de la machine,

Figures 7,8,9,10 et 11 sont des vues partielles,en coupe transversale,montrant l'un des alvéoles lorsqu'il est respectivement,sous la brosse de positionnement,au poste de dénoyautage dans les phases de prise de contact du poinçon avec le noyau,d'éjection du noyau et de remontée du poinçon et,enfin,lorsqu'il est au poste de nettoyage,

Figure 12 est une vue partielle en perspective,montrant plus en détail une forme d'exécution de l'une des douilles de la plaque d'essuyage.

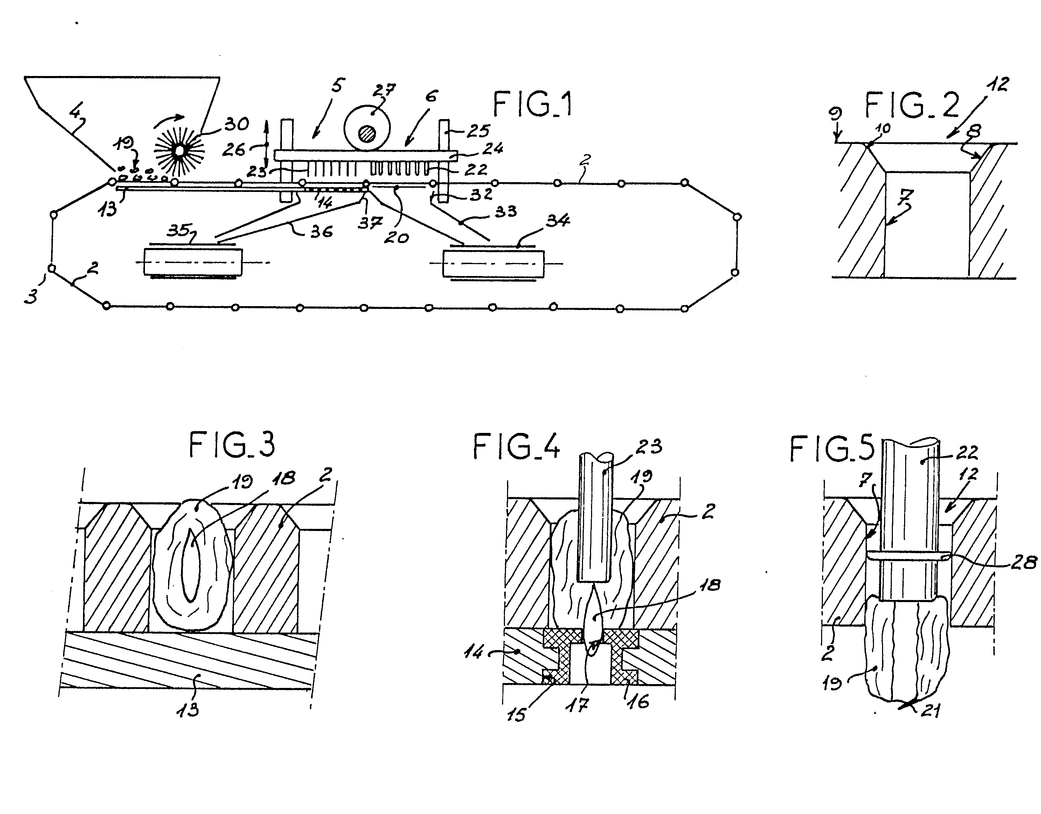

De façon connue,et comme représenté à la figure 1, cette machine comprend des plaques alvéolées (2) articulées en (3) les unes aux autres et formant une chaine sans fin passant sur des moyens d'entrainement et de renvoi non représentés.Durant leur trajectoire horizontale supérieure,les plaques alvéolées (2) passent successivement ,au-dessous d'une trémie d'alimentation (4),à un poste de dénoyautage (5) et à un poste d'éjection des pulpes (6).

Selon l'invention,chacun des alvéoles des plaques alvéolées présente,comme montré à la figure 2,la forme d'un puits cylindrique (7) avec chanfrein d'entrée (8).Le puits cylindrique a un diamètre qui,régulier sur toute sa hauteur,est adapté au calibre du fruit qu'il doit recevoir. Le chanfrein (8) est raccordé à la face supérieure (9) de la plaque (2) par un arrondi (10) facilitant l'introduction du fruit dans l'alvéole désigné de façon générale par (12).

Comme représenté schématiquement à la figure 1,durant sa trajectoire entre la trémie (4) et le début du poste de dénoyautage (5),chacune des plaques (2) repose sur une plaque fixe (13) constituant fond pour les alvéoles (12).Cette

5

plaque est prolongée au-dessous du poste de dénoyautage par une plaque (14) comportant,comme montré figure 4, une pluralité de logements épaulés (15),recevant chacun une douille élastique (16) avec orifice axial (17).Cet orifice,dont les bords sont élastiques,a une dimension diamétrale correspondant sensiblement à celle du noyau (18) du pruneau (19).Au poste (6) d'éjection des pulpes , chacune des plaques alvéolées (2) est soutenue latéralement par deux glissières longitudinales (20) montrées à la figure 1.

Les organes d'éjection des pulpes sont constitués par des éjecteurs (22) qui sont juxtaposés aux poinçons (23) assurant le dénoyautage et qui,dans une forme d'exécution préférée,sont disposés sur le même support (24) de ces poinçons.Ce support est monté coulissant sur des colonnes verticales (25) et est relié à des moyens aptes à lui communiquer un mouvement vertical alternatif dans le sens de la flèche (26),moyens représentés schématiquement par la came (27).Il est évident que,lorsque le support (24) et les éjecteurs (22) et poinçons (23) qu'il porte sont déplacés verticalement dans un sens ou dans l'autre,les plaques alvéolées sont temporairement immo-bilisées avant de reprendre leur déplacement pas à pas.

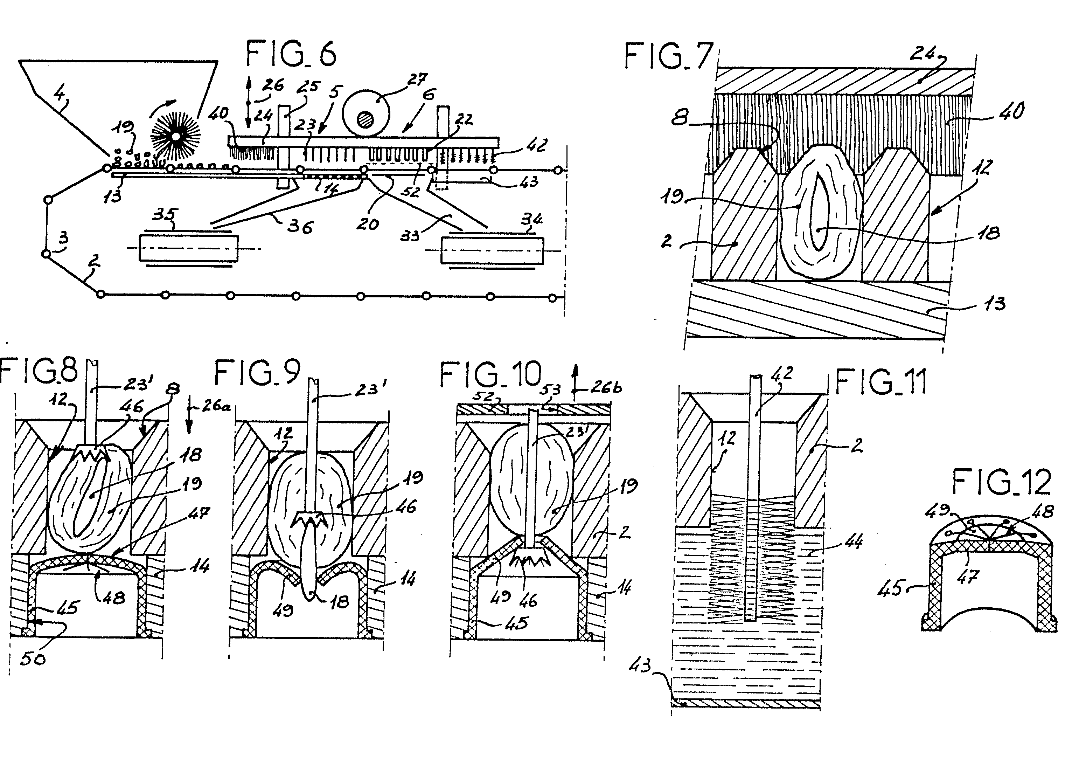

Comme montré plus en détail à la figure 5,chacun des éjecteurs (22) a un diamètre extérieur inférieur à celui intérieur du puits cylindrique (7) d'un alvéole (12) , mais est muni,à proximité de son extrémité libre,d'une collerette (28).Cette collerette,réalisée en matière élastique,a un diamètre au moins égal à celui du puits (7),de manière à pouvoir constituer organe d'essuyage de la paroi de ce puits,comme cela sera précisé plus loin.

Le fonctionnement de cette machine est le suivant:

Les pruneaux (19),disposés dans la trémie (4),pénètrent aisément dans les alvéoles (12) de chacune des plaques (2) dont le fond est alors constitué par la plaque (13).De façon connue,les pruneaux excédentaires sont chassés par une brosse rotative (30).Lors du déplacement pas-à-pas de la chaine de plaque (2),chaque plaque parvient au poste de dénoyautage (5) où,durant l'interruption de son déplacement,chacun des poinçons (23),pénétrant dans l'un des alvéoles,traverse la pulpe du pruneau (19) pour chasser le noyau (18).Comme montré à la figure 4,celui-ci passe à travers l'orifice (17) de la douille élastique (16).Il est à noter que la coupelle (21) figure 5 se formant lors du poinçonnage de la base du pruneau par son propre noyau,soit est chassée en même temps que le noyau,soit reste dans l'orifice (17),cas dans lequel,lors de la remise en mouvement de la plaque alvéolée (2),elle est sectionnée ou rabattue à l'intérieur du puits cylindrique (7).

Au poste d'éjection des pulpes (6) qui suit immédiatement le poste de dénoyautage,grâce à l'absence de fond au-dessous des plaques alvéolées (2),certaines pulpes peuvent tomber par gravité avant actionnement des moyens d'éjection,lorsque ces moyens d'éjection sont en action, les éjecteurs (22) pénètrent dans les puits (7) et chassent les pulpes,comme montré à la figure 5.Durant ce mouvement,l'action de nettoyage du puits (7),opérée par les parties de la pulpe en contact avec la paroi de ce puits,est complétée par l'action de raclage assurée par la collerette élastique (28).Il en résulte,qu'à la fin du mouvement descendant de l'éjecteur (22),le puits (7) correspondant présente une surface lisse et propre débarrassée de l'essentiel du jus de la pulpe qui a tendance à y adhérer et à former des cristaux de sucre.Les pulpes, ainsi éjectées des alvéoles,tombent dans une trémie (32) prolongée par une goulotte (33) les dirigeant sur un convoyeur (34) ,différent de celui (35) évacuant les noyaux qui lui ont été amenés par un ensemble goulotte (36)-trémie (37) disposé sous le poste de dénoyautage.

Une autre forme d'exécution de cette machine est représentée aux figures 6 à 12.Comme montré plus particulièrement à la figure 6,cette machine se différencie de la précédente par le fait que le support (24) portant les poinçons (23) et les éjecteurs (22),supporte également,en amont des poinçons,une brosse de positionnement (40) et,en aval des éjecteurs (22),une pluralité de brosses de nettoyage (42).

Comme montré plus en détail à la figure 7,lors du mouvement vertical de descente du support (24),les poils de la brosse (40),qui sont dirigés vers le bas,obligent les fruits (19) à pénétrer dans les alvéoles (12) et,en conséquence,obligent ces fruits a prendre une position verticale dans ces alvéoles.Cette brosse empêche donc que des fruits se positionnent en travers sur les chanfreins d'entrée (8) des alvéoles ,en favorisant la casse des noyaux par les poinçons ,source de perturbation du fonctionnement de la machine.

Quant aux brosses de nettoyage (42),qui sont en même nombre que les alvéoles de la plaque sous-jacente et disposées de la même façon que ces alvéoles,elles assurent,lors du mouvement vertical de descente du support (24),le nettoyage de chacun de ces alvéoles (12) ,comme montré à la figure 11.En fin de course verticale vers le bas,chaque brosse pénètre dans un récipient (43) contenant un liquide de nettoyage (44),afin de parfaire,lors du mouvement vertical de remontée,le nettoyage de l'alvéole (12) correspondant.

Cette machine se différencie également de la précédente par la forme de ses poinçons (23') et les douilles élastiques (45)qui leur sont associées dans la plaque d'essuyage (14).

Comme montré figures 8 à 10,chaque poinçon comporte, à son extrémité libre,une tête (46) en forme de tulipe tronconique dentée périphériquement.Cette tête a un diamètre extérieur plus grand que le diamètre de la tige la portant.La douille (45) comporte un fond (47)qui est fendu en étoile par des fentes (48) délimitant des lèvres élastiques triangulaires (49).Cette douille (45) est rapportée dans des logements (50) de la plaque d'essuyage(14).

Ces logements sont,bien entendu,en même nombre et ont la même répartition que les alvéoles (12) des plaques alvéolées (2) avec lesquelles ils viennent en coïncidence à chaque arrêt de cette plaque.Les douilles (45) sont disposées de manière que leur fond (47) affleure la face supérieure de la plaque (14),comme montré à la figure 8.

Grâce à cet agencement,lorsque 'le support (24) est soumis à un déplacement vertical vers le bas dans le sens de la flèche (26a) de figure 8,sa tête (46) ,en forme de tulipe dentée,est en mesure de venir en contact avec le noyau (18) du fruit,même lorsque celui-ci est incliné, comme montré à la figure 8.En d'autres termes,la denture de la tête (46) accroche le noyau (18) ,favorise son redressement et évite qu'il se mette  en travers,donc évite que ce noyau soit cassé par le poinçon (23'') correspondant.Sous l'effet de la descente du poinçon (23'),et comme montré figure 9,le noyau (18) écarte lui-même les lèvres élastiques (49) de la douille,au même titre d'ailleurs que la tête (46) du poinçon.A la fin du mouvement de descente,la tête (46) du poinçon est à l'intérieur de la douille (45),donc en-dessous du fond (47) de celle-ci.De la sorte,lors du mouvement ascensionnel de ce poinçon (23') dans le sens de la flèche (26b) de figure 10,l'épaulement formé entre sa tête (46) et sa tige, assure l'écartement des lèvres (49) de la douille (45) et évite ainsi que ces lèvres pincent la pulpe du fruit (19) ,ce qui serait préjudiciable,lors du déplacement longitudinal ultérieur de la plaque alvéolée  (2).En d'autres termes,la tête épaulée évite que les douilles (45) aient tendance à retenir les pulpes lors de la translation des plaques alvéolées (2).De plus,en pénétrant à nouveau dans le fruit lors de son mouvement ascensionnel,la tête (46) a tendance à décaler celui-ci vers le haut et éviter qu'il soit à nouveau pincé par les lèvres (49) reprenant élastiquement leur position initiale.

9

Il est à noter que pour éviter tout entrainement de la pulpe (19) par le poinçon (23') en cours de remontée, le poste d'éjection est muni d'une plaque fixe (52) comportant localement des perçages (53) pour le passage des poinçons .Cette plaque est disposée de manière à être à proximité de la plaque alvéolée (2) sous-jacente.

Il ressort de ce qui précède que,grâce à sa structure, ce dispositif permet de dénoyauter,sans aucun problème, des fruits secs,tels que des pruneaux présentant un fort pouvoir adhésif et dont le poinçonnage,lors du dénoyautage,pose en général des problèmes.Il est évident qu'une telle machine peut également être utilisée pour dénoyauter tout autre fruit,tel que des dattes,mais aussi des fruits à dénoyautage plus simple,tels que les cerises,les abricots et les pêches.

De plus,grâce à la disposition du poste d'éjection immédiatement à côté du poste de dénoyautage,la machine a un encombrement beaucoup moins important,exige moins de plaques alvéolées et est donc moins onéreuse que celles habituelles.

10

-REVENDICATIONS-

1-Machine è dénoyauter les fruits secs à pulpe sirupeuse,du type comportant des plaques alvéolées (2) de réception,de maintien et de transport des fruits,plaques articulées les unes aux autres et formant une chaîne continue passant successivement,avec un déplacement pas-à-pas, au-dessous d'une trémie (4) de distribution des fruits dans les alvéoles (12),à un poste de dénoyautage (5) où des poinçons (23) mobiles verticalement pénètrent dans les alvéoles (12) et traversent les pulpes (19) pour chasser les noyaux (18),et è un poste d'éjection (6) des pulpes, où des éjecteurs (22) chassent les pulpes des alvéoles, caractérisée en ce que ses plaques alvéolées (2) ont des alvéoles (12) cylindriques avec chanfrein d'entrée (8) et reposent,d'une part,de la trémie (4) au début du poste de dénoyautage (5),sur une plaque d'essuyage (14) munie d'ouvertures (17) à bord élastique aptes à être traversées par les noyaux (18),tandis que son poste d'éjection (6) est constitué par des éjecteurs verticaux (22) qui,juxtaposés aux poinçons de dénoyautage (23),se déplacent verticalement en même temps que ces derniers et chassent les pulpes (19) à travers les alvéoles (12) en direction de moyens de réception (32) disposés entre les deux brins de la chaine formée par les plaques alvéolées (2).

2-Machine selon la revendication 1,caractérisée en ce que chacun des éjecteurs (22) a un diamètre inférieur à celui de la partie cylindrique (7) des alvéoles (12) et comporte,à proximité de son extrémité libre,une collerette en matière élastique (28) qui,de diamètre au moins égal à celui de la partie cylindrique (7) précitée,constitue organe d'essuyage de la paroi de l'alvéole.

3-Machine selon l'une quelconque des revendications 1 et 2,caractérisée en ce que les éjecteurs (22) sont disposés sur le support (24) des poinçons (23) de dénoyautage .

4-Machine selon la revendication 1,caractérisée en ce que les poinçons de dénoyautage (23) et les éjecteurs (22) sont associés à des brosses de nettoyage (42) disposées en aval des postes de dénoyautage (3) et d'éjection (6) et aptes,lors du mouvement vertical de dénoyautage,à traverser les alvéoles (12)pour pénétrer dans un bain de liquide de nettoyage (44).

5-Machine selon la revendication 1,caractérisée en ce que les poinçons de dénoyautage (23) sont associés à une brosse de positionnement (40) qui,disposée en amont d'eux et dont les poils sont tournés en direction des alvéoles, est apte,lors du mouvement vertical de descente des poinçons (23) ,à pousser les fruits (19) dans ces alvéoles.

6-Machine selon l'ensemble des revendications 1,3,4 et 5,caractérisée en ce que la brosse de positionnement (40) et les brosses de nettoyage (42) sont disposées,respectivement en amont et en aval,sur le support (24) des poinçons de dénoyautage (23) et des éjecteurs (22).

7-Machine selon l'une quelconque des revendications 1 à 6,caractérisée en ce que chaque poinçon de dénoyautage (23) présente,à son extrémité libre inférieure,une tête (46) en forme de tulipe dentée de plus grand diémètre extérieur que celui de sa tige.

8-Machine selon l'une quelconque des revendications 1 à 7,caractérisée en ce que les ouvertures (17) à bord élastique de la plaque d'essuyage (14) sont constituées, chacune,par le fond (47) fendu en étoile d'une douille en matière élastique (45) rapportée dans ladite plaque avec la même répartition que les alvéoles (12) des plaques (2).

9-Machine selon l'une quelconque des revendications 1 à 8,caractérisée en ce qu'elle comporte,au poste d'éjection (6) ,des glissières longitudinales fixes (20)de soutien latéral des plaques alvéolées (2).

10-Dispositif selon l'une quelconque des revendications 1 à 9, caractérisé en ce que le chanfrein (8) de chaque alvéole (12) est raccordé à la face supérieure (9) de la plaque (2), dans laquelle elle est ménagée, par un arrondi (10) de guidage des fruits.

FIG.1

FIG.2

FIG.3

FIG.4

FIG.5

0093679

0093679

FIG.6

FIG.7

FIG.8

FIG.9

FIG_10

FIG.11

FIG_12

Office européen
des brevets

# RAPPORT DE RECHERCHE EUROPEENNE

EP   83 42 0069

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | DE-A-2 834 985 (FERRUM AG.) <br> * Page 11, paragraphe 4 - page 14, paragraphe 2; figures 1-2 * | 1,5 | A 23 N   4/04 <br> A 23 N   4/08 |
| Y | FR-A-1 491 306 (SUNSWEET GROWERS INC.) <br> * Page 10, paragraphe 3; figures 23-27 * | 1,8 | |
| A | FR-A-1 591 056 (SOCIETE DES ETABLISSEMENTS FORDIMIT) | | |
| A | FR-A-2 038 568 (SOCIETE DES ETABLISSEMENTS FORDIMIT) | | |
| A | US-A-3 556 281 (J.L. MARGAROLI) | | |

DOMAINES TECHNIQUES RECHERCHES (Int. Cl. ³)

A 23 N

Le présent rapport de recherche a été établi pour toutes les revendications

| Lieu de la recherche <br> LA HAYE | Date d'achèvement de la recherche <br> 13-07-1983 | Examinateur <br> NEHRDICH H.J |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82